Europäisches Patentamt

European Patent Office

Office européen des brevets

(19)

(11) Publication number

**0 156 572**
**A2**

(12) ## EUROPEAN PATENT APPLICATION

(21) Application number: 85301640.0

(22) Date of filing: 08.03.85

(51) Int. Cl.⁴: **B 01 F 17/00**
C 10 M 173/00
//(C10M173/00, 159:12),
C10N40:08, C10N40:22

(30) Priority: 21.03.84 GB 8407300

(43) Date of publication of application:
02.10.85 Bulletin 85/40

(84) Designated Contracting States:
BE CH DE FR GB IT LI NL SE

(71) Applicant: IMPERIAL CHEMICAL INDUSTRIES PLC
Imperial Chemical House Millbank
London SW1P 3JF(GB)

(72) Inventor: Baker, Alan Stuart
Kismet George Green Road
George Green Slough Berkshire(GB)

(74) Representative: Wood, Dennis John Cecil et al,
Imperial Chemical Industries PLC Legal Department:
Patents PO Box 6
Welwyn Garden City Herts, AL7 1HD(GB)

(54) Surfactants for oil/water systems in which the hydrophilic component contains a specified anionic grouping.

(57) For use as surfactants in oil water systems, e.g. hydraulic fluids, compounds are described which contain in the molecule a hydrophobic component and a hydrophilic component covalently bonded together, where the hydrophobic component is a saturated or unsaturated $C_{30-500}$ hydrocarbon chain and the hydrophilic component contains an anionic grouping selected from phosphate, phosphonate, sulphate, sulphonate and carboxymethyl.

EP 0 156 572 A2

Croydon Printing Company Ltd

## SURFACTANTS FOR OIL/WATER SYSTEMS IN WHICH THE HYDROPHILIC COMPONENT CONTAINS A SPECIFIED ANIONIC GROUPING

This invention relates to novel anionic surfactants which are useful in liquid systems consisting of an oil phase and an aqueous phase, in particular in such systems where the aqueous phase has a high dissolved inorganic content and/or where the system is subjected to relatively high temperatures.

There have been numerous proposals in recent years to use as surfactants reaction products of alk(en)ylsuccinic acids or anhydrides with functional compounds such as polyols and polyamines. In particular, it has been proposed in United States Patent No. 3,324,033 to employ the products of reacting an alkenylsuccinic anhydride with diethanolamine as ashless dispersants for lubricating oils for internal combustion engines, whereby deposition of partial oxidation products upon engine parts may be inhibited. United States Patent No. 4,031,118 described inter alia reaction products of alkenylsuccinic anhydrides with polyoxyalkylene derivatives of polyols and their use as additives to lubricating oils for the purpose of minimising aqueous emulsion deposits in internal combustion engines. European Specification No. 0074724 A2 describes the use similarly of reaction products of an alkenylsuccinic anhydride and a substituted imidazoline. Other reaction products of alkenylsuccinic acids or anhydrides with hydroxy-amines are described in British Specifications Nos. 2031908 A and 2032951 A.

We have now discovered a useful class of anionic surfactants which includes derivatives of alk(en)ylsuccinic acids or anhydrides.

According to the present invention we provide compounds suitable for use as surfactants in liquid systems consisting of an oil phase and an aqueous phase, the compounds containing in the molecule a hydrophobic component and a hydrophilic component covalently bonded together, wherein the hydrophobic component is a saturated or unsaturated hydrocarbon chain containing from 30 to 500 carbon atoms, and wherein the hydrophilic component contains an anionic grouping selected from phosphate, phosphonate, sulphate, sulphonate and carboxymethyl.

The term "oil phase" as used herein is to be understood as referring to water-immiscible liquids in general, and thus not confined to, although embracing, naturally occurring oils such as hydrocarbons or fatty acid esters.

The hydrophobic component of the surfactant compound may be a polymer of a mono-olefin, in particular a polymer of a mono-olefin containing from 2 to 6 carbon atoms such as ethylene, propylene, butene-1 and, especially, isobutene. Such a component may conveniently be provided by the residue of a polyalk(en)ylsuccinic anhydride. Anhydrides of this class are known commercial materials which are made by an addition reaction at elevated temperature, optionally in the presence of a halogen catalyst, between a polyolefin, such as one of those referred to above, containing a terminal unsaturated grouping and maleic anhydride. A final hydrogenation step may be performed if a saturated product is required. Typical poly(isobutenyl)succinic anhydrides which are available commercially have number average molecular weights in the range 400 to 5000.

The hydrophobic components mentioned above may conveniently be linked to a hydrophilic component containing an anionic grouping as defined by reacting a polyalk(en)ylsuccinic anhydride with one or more appropriate co-reactants. The anhydride group reacts readily with compounds containing, for example, hydroxyl or amino groups, and therefore one way in which the surfactants of the invention may be made is by reacting the anhydride directly with a compound which has in the molecule at least one hydroxyl or amino group and also at least one anionic grouping. Examples of such compounds, where the anionic grouping which is to be present in the hydrophilic component of the surfactant is a carboxyl group, include amino-acids such as glycine and short-chain hydroxy acids such as glycollic acid or lactic acid.

Another way in which the surfactants may be produced is by an indirect, two-stage process in which the polyalk(en)ylsuccinic anhydride is reacted with a linking compound containing at least one reactive group such as a hydroxyl or amino group and at least one other reactive group, and the intermediate product so obtained is then reacted with a compound containing the anionic grouping and a group capable of combining with the other reactive group in the linking compound. Suitable linking compounds include polyols, polyamines and hydroxyamines, as examples of which there may be mentioned ethylene glycol, propylene glycol, glycerol, trimethylolpropane, pentaerythritol, sorbitol, ethylene diamine, trimethylene diamIne, hexamethylene diamine, diethylene triamine, ethanolamine, diethanolamine and dipropanolamine. Hydroxyamines are appropriate linking compounds since, because of the difference in reactivity of the hydroxyl and amino groups, it is easier to avoid the formation of double-ended or oligomeric intermediate products. Suitable compounds containing an anionic grouping and another reactive group, with which the intermediate products are then reacted, include strong inorganic acids such as phosphoric acid, sulphuric acid, chlorosulphonic acid and sulphamic acid, and organic acids such as alkyl- and aryl-phosphonic acids, alkyl- and aryl-sulphonic acids and monochloroacetic acid.

In preparing the surfactants of the invention by either the direct or the indirect route, the reaction of the polyalk(en)ylsuccinic anhydride with the compound containing the anionic grouping or with the linking compound, as the case may be, is preferably carried out under relatively mild conditions. The two reactants may be heated together at a temperature in the range 70 - 150°C. optionally in the presence of an inert solvent or diluent such as xylene, for a sufficient period of time for the reaction mixture to attain a substantially constant acid value. In the case of the direct route, the polyalk(en)ylsuccinic anhydride and the compound containing the anionic grouping are used in approximately stoichiometric proportions to each other with respect to the anhydride ring and the hydroxyl or amino group. Generally, a half-derivative of the substituted succinic acid, containing a free carboxyl group derived from the opening of the anhydride ring, will be formed thereby. The same principles apply, in the case of the indirect route, to the reaction between the anhydride and the linking compound, except that only one reactive grouping in the latter is taken into account in order to ensure that the intermediate product still contains at least one grouping available for subsequent reaction with the compound containing the anionic grouping. Here again, an inert solvent or diluent may be present.

In the second stage of the indirect route, the intermediate product is reacted with the compound containing the anionic grouping at a temperature and for a period of time sufficient for completion of the reaction as indicated by the attainment of a substantially constant acid value of the reaction mixture. Where the compound containing the anionic grouping is a polybasic acid such as phosphoric acid or sulphuric acid, it is preferred that only one of the ionisable hydrogen atoms therein is reacted and that no attempt is made to remove water of reaction; we find that reaction for about 3 hours at 70°C is usually adequate, more stringent conditions introducing the risk of dehydration of the product, especially where sulphuric acid is used. These complications do not arise in the case of monochloroacetic acid, but the reaction proceeds more slowly and heating for 5 hours at 160°C may be required. In general, the compound containing the anionic group is used in a stoichiometric amount with respect to the available reactive groups in the intermediate product (taking into account the above-mentioned preference in the case of a polybasic acid).

The final products of the preparative procedures outlined above are all acidic in character and may if desired be stored and used as surfactants in that form. They may, however, alternatively be neutralised with ammonia, organic bases such as amines or aminoalcohols, or inorganic bases before storage or use.

The surfactants of the invention are useful as dispersants in non-aqueous liquids and as emulsifying agents in systems consisting of an aqueous phase and a water-immiscible phase, in particular in oil/water systems; they may be used for the production of both oil-in-water and water-in-oil types of emulsion. Oils and other water-immiscible liquids which may be satisfactorily emulsified in water with the aid of these surfactants include fatty glycerides, mineral oils, hydrocarbon fuel oils and other liquid hydrocarbons, synthetic lubricants such as the tetrapelargonate ester of pentaerythritol, bitumens, waxes and polyolefins such as poly(isobutylene). The resulting emulsions are useful inter alia as hydraulic fluids, cutting oils and other metal-working fluids.

In producing the emulsions, it is generally preferred to add the surfactant to the oil phase before the latter is contacted with the aqueous phase. In cases where it is desired to neutralise the free acidic groups in the surfactant, the base may be introduced before, during or after the blending of the surfactant with the oil phase.

The surfactants of the invention are advantageous in that they can tolerate water phases which are high in dissolved inorganic content, for example naturally hard waters or brines containing up to saturation levels of salts such as sodium chloride, magnesium chloride or calcium chloride. Those surfactants in which the anionic grouping is derived from phosphoric acid have particularly good tolerance towards the presence of polyvalent cations such as $Ca^{2+}$. A further advantage is that the surfactants do not lose their efficacy at higher temperatures; they perform satisfactorily at temperatures of up to 100°C or higher.

The proportion of surfactant which is required in a particular oil/water system may vary widely according to the nature of the two phases, but in most instances it will lie in the range 0.1% to 25% by weight, based on the disperse phase of the emulsion.

The invention is illustrated by the following examples, in which parts and percentages are by weight.

## EXAMPLE 1

A blend of commercial poly(isobutenyl)succinic anhydride (PIBSA) of molecular weight approx. 1000 (85% solids in xylene, 760.5 g) and monoethanolamine (39.5 g) was heated with stirring in a round-bottom flask at 70°C under an atmosphere of nitrogen for 3 hours. There was then added to the product 83% phosphoric acid (78.4 g) and heating with stirring at the same temperature was continued for a further 3 hours.

The final product was an 87% solids solution of anionic surfactant having an acid value of 93.4 mg KOH/g.

The above product (1.0 g) was dissolved in a white paraffinic mineral oil (179.0 g) by warming the mixture to 50°C and stirring until it became homogeneous. After the addition to this oil phase of 0.880 sp.gr. aqueous ammonia (0.04 g), there was added slowly to it 20% aqueous calcium chloride solution (20.0 g) whilst the total material was being passed through a "Silverson" mixer. When the addition of the aqueous phase was complete, the emulsification was continued at full speed for 3 minutes.

The 10/90 water-in-oil emulsion thus obtained was of good stability, showing no more than slight surface separation of the oil phase after storage at 70°C for 72 hours.

## EXAMPLE 2

The procedure of Example 1 was repeated, but using the following reactants : PIBSA mol.wt. 1000 (734.8 g), diethanolamine (65.2 g) and 83% phosphoric acid (156.8 g). The product was an 88.5% solids solution of anionic surfactant having an acid value of 124.8 mg KOH/g.

The product was used to produce a water-in-oil emulsion as described in Example 1, except that the amount of ammonia solution was increased to 0.08g. The resulting emulsion was of similar stability to that of Example 1.

## EXAMPLE 3

The procedure of Example 1 was repeated, but using the following reactants : PIBSA mol.wt. 1000 (183.7 g), diethanolamine (16.3 g) and 98% sulphuric acid (30.2 g). The product was an 86.9% solids solution of anionic surfactant having an acid value of 163.5 mg KOH/g.

The product was used to produce a water-in-oil emulsion as described in Example 2. The resulting emulsion was of similar stability to that of Example 1.

## EXAMPLE 4

The procedure of Example 1 was repeated, but using the following reactants : PIBSA mol.wt. 1000 (190.1 g), monoethanolamine (9.9 g) and monochloracetic acid (15.1 g). After addition of the monochloracetic acid, the reaction mixture was heated with stirring for 5 hours at 160°C, instead of 3 hours at 70°C as stated in Example 1. The product was an 86.9% solids solution of anionic surfactant having an acid value of 40.3 mg KOH/g.

Following the procedure of Example 1, but omitting the ammonia, the product (2.0 g) was used to make an emulsion of demineralised water (20.0 g) in mineral oil (178.0 g). The resulting emulsion showed no more than slight surface separation of the oil phase after storage at 20-25°C for 24 hours.

The product was also used, as an equal weight replacement for the surfactant of Example 1, to make an emulsion of 20% aqueous calcium chloride solution in mineral oil according to the recipe of Example 1. The emulsion thus obtained again showed only slight surface oil separation after 24 hours' storage at 20-25°C.

## EXAMPLE 5

A blend of PIBSA mol.wt. 1000 (1000 g), tris(hydroxymethyl)-aminomethane (102.9 g) and xylene (110.3 g) was heated with stirring at 110°C under an atmosphere of nitrogen for 3 hours. There was then added to the product 83% phosphoric acid (304.4 g) and heating with stirring was continued at 70°C for a further 3 hours.

The product was a 78.4% solids solution of anionic surfactant having an acid value of 126.4 mg KOH/g.

Following the procedure of Example 1, the product (2.0 g) was used to make an emulsion of demineralised water (20.0 g) in mineral oil (178.0 g) (the addition of ammonia was in this case omitted). The resulting emulsion showed only slight surface separation of the oil phase after storage at 20-25°C for 24 hours.

## EXAMPLE 6

A blend of PIBSA mol.wt. 1000 (300.0 g) and glycerol (23.5 g) was heated with stirring at 140°C under a nitrogen atmosphere for about 3 hours. There was then added 83% phosphoric acid (30.5 g) and heating with stirring was continued for 3 hours at a temperature of 70°C.

The product was an 84.8% solids solution of anionic surfactant having an acid value of 96.0 mg KOH/g.

The product (2.0 g), with the addition of 0.880 sp.gr. ammonia solution (0.04 g), was used to make an emulsion of demineralised water (20.0 g) in mineral oil (178.0 g), following the procedure of Example 1. The emulsion obtained was of similar stability to that of Example 5.

## EXAMPLE 7

A blend of PIBSA mol.wt. 1000 (400 g) and glycine (26.0 g) was heated with stirring under an atmosphere of nitrogen for about 3 hours at 140°C.

The product was an 85.9% solids solution of anionic surfactant having an acid value of 60.1 mg KOH/g.

The product (1.0 g) was used to make an emulsion of 20% aqueous calcium chloride solution (20.0 g) in mineral oil (179.0 g) according to the procedure of Example 1 but without the addition of ammonia. The resulting emulsion was of similar stability to that of Example 5.

## EXAMPLE 8

A blend of PIBSA mol.wt. 1000 (300.0 g) and glycollic acid (19.4 g) was heated with stirring under an atmosphere of nitrogen for 3 hours at 70°C.

The product was an 85.0% solids solution of anionic surfactant having an acid value of 92.0 mg KOH/g.

The product was used, as an equal weight replacement for the surfactant of Example 1, to make an emulsion of 20% aqueous calcium chloride solution in mineral oil as described in Example 1. The emulsion thus obtained was of similar stability to that of Example 5.

## EXAMPLE 9

A blend of PIBSA mol.wt. 750 (100% solids, 300.0 g) and monoethanolamine (25.2 g) was treated according to the procedure of Example 1.  There was then added 98% sulphuric acid (35.6 g) and the Example 1 procedure continued.

The product was an 87.9% solids solution of anionic surfactant having an acid value of 149.0 mg KOH/g.

The product (1.0 g) was used to make an emulsion of 20% aqueous calcium chloride solution (20.0 g) in mineral oil (179.0 g) following the procedure of Example 1 but omitting the addition of ammonia. The resulting emulsion showed no more than slight surface separation of the oil phase after storage at 70°C for 72 hours.

## EXAMPLE 10

The 87% solids solution of surfactant of acid value 93.4 mg KOH/g obtained as described in Example 1 was used to prepare an oil-in-water emulsion as follows.

The surfactant solution (1.20 g) was dissolved in xylene (4.0 g) in the manner set out in Example 1. The resulting solution was then added slowly to demineralised water (95.0 g) whilst the total material was being passed through a "Silverson" mixer; when the addition of the oil phase was complete, the emulsification was continued at full speed with the addition to the emulsion of sufficient isopropyl-aminoethanol to bring the pH to 7.70, and thereafter for 3 minutes more.

The resulting 5/95 oil-in-water emulsion exhibited only slight creaming after storage at 20-25°C for 24 hours.

## EXAMPLE 11

A solution of anionic surfactant was made as described in Example 9 except that the 98% sulphuric acid was replaced by an equal weight of 83% phosphoric acid. The product had a solids content of 86.3% and an acid value of 117.5 mg KOH/g.

The product (1.20 g) was used to make an emulsion of a white paraffinic mineral oil (4.0 g) in demineralised water (95.0 g) as described in Example 10. The resulting emulsion had similar stability to that of Example 10.

PV. 33048

CLAIMS :

1.   A compound suitable for use as surfactant in liquid
     systems consisting of an oil phase and an aqueous
     phase, the compound containing in the molecule a
     hydrophobic component and a hydrophilic component
     covalently bonded together, wherein the hydrophobic
     component is a saturated or unsaturated hydrocarbon
     chain containing from 30 to 500 carbon atoms, and
     wherein the hydrophilic component contains an anionic
     grouping selected from phosphate, phosphonate,
     sulphate, sulphonate and carboxymethyl.

2.   A compound as claimed in claim 1, wherein the
     hydrophobic component is a polymer of a mono-olefin
     containing from 2 to 6 carbon atoms.

3.   A compound as claimed in claim 2, wherein the
     hydrophobic component is the residue of a poly(isobutenyl)succinic anhydride having a molecular weight
     in the range 400 to 5000.

4.   A compound as claimed in any one of claims 1 to 3,
     which has been neutralised with ammonia or an inorganic
     or organic base.

5.   A process for the preparation of a compound as claimed
     in claim 3, wherein a poly(isobutenyl)succinic
     anhydride having a molecular weight in the range 400
     to 5000 is reacted with a compound containing in the
     molecule at least one hydroxyl group or amino group
     and at least one anionic grouping as hereinabove
     defined.

6.   A process as claimed in claim 5, wherein the compound
     with which the poly(isobutenyl)succinic anhydride is
     reacted is selected from glycine, glycollic acid and
     lactic acid.

7.   A process for the preparation of a compound as claimed
     in claim 3, wherein a poly(isobutenyl)succinic
     anhydride having a molecular weight in the range 4oo
     to 5000 is reacted in a first stage with a linking
     compound containing at least one hydroxyl group or amino group and at least one other reactive group, and in a second stage the intermediate product so obtained is reacted with a compound containing an anionic grouping as hereinabove defined and a group capable of combining with the other reactive group in the linking compound.

8. A process as claimed in claim 7, wherein the linking compound is a hydroxyamine and the compound containing the anionic group is selected from phosphoric acid, sulphuric acid, chlorosulphonic acid, sulphamic acid, alkylphosphonic acids, arylphosphonic acids, alkylsulphonic acids, arylsulphonic acids and monochloro-acetic acid.

9. An emulsion system comprising of an aqueous phase and a water-immiscible phase in which there is present as surfactant a compound as claimed in any one of claims 1 to 4.

10. An emulsion system as claimed in claim 9, wherein the surfactant is present in an amount of from 0.1% to 25% by weight of the disperse phase of the emulsion system.